# EUROPEAN PATENT SPECIFICATION

(11) **EP 0 358 943 B1**
(45) Date of publication and mention of the grant of the patent: **17.03.1993**
(21) Application number: 89114659.9
(22) Date of filing: 08.08.1989
(51) Int. Cl.: B60B 33/02

(54) **A castor mounting with a brake**
Lenkrollenbefestigung mit Feststellvorrichtung
Support de roue à pivot avec dispositif de blocage

(30) Priority: 07.09.1988 IT 6779988
(43) Date of publication of application: 21.03.1990
(73) Proprietor: TELLURE ROTA S.p.A., 41043 Formigine (Modena) (IT)
(72) Inventor: Santachiara, Andrea, I-41040 Spezzano Modena (IT)
(74) Representative: Bosotti, Luciano

(56) References cited:
- DE-A- 1 918 357
- DE-A- 2 459 580
- DE-A- 3 420 054
- DE-U- 6 900 382
- GB-A- 2 047 364

## Description

The present invention relates to a castor mounting.

More particularly, the invention relates to a mounting comprising an attachment plate for fixing to the body of a movable structure, a forked member having a top facing the attachment plate and two downwardly-projecting wings carrying a pin for rotatably supporting the castor, an extension of the fork which extends rearwardly above the castor, an annular member fixed to the attachment plate for connecting the latter to the top of the forked member, an upper ring of balls and a lower ring of balls interposed between ball races defined between the attachment plate and the top of the forked member and between the top of the forked member and the annular member respectively, and a parking brake comprising a resilient plate which is supported by the forked member so that it can pivot like a rocker arm and which is interposed between the castor and the rear extension of the fork, the plate having a first arm adapted to be operated from the exterior to lock the castor against rotation relative to the forked member, and a second arm, opposite the first, arranged to cooperate with a toothed edge of the annular member to lock the forked member against rotation relative to the attachment plate.

A mounting of this type, corresponding to the preamble of claim 1, is described in German patent DE-A-2459580 to which reference is made. In these known mountings, the rear extension of the fork has a guide aperture in which a release portion of an operating pedal is slidable, the pedal including a cam portion which cooperates between the fork extension and the resilient plate. In order to lock the castor and the mounting against rotation, a first portion of the pedal is then operated to make the release part leave the slot, this part being actuated to return the castor to its released configuration.

This solution, although having the advantage of being simple to produce, has problems of poor reliability due to the ease with which dust and contaminants can infiltrate the slot in the rear extension of the fork. Moreover, the release of the brake, which is effected in a different region of the mounting from that used for braking, specifically in a position closer to the axis of rotation of the castor, is not at all easy and, in the case of movable structures of a certain shape, can be impossible.

The object of the present invention is to provide a support of the type specified at the beginning of the description which does not have the above problems and is very reliable in use as well as being cheap and simple to produce.

According to the invention, this object is achieved by virtue of the fact that a first pedal-like element is articulated to the first arm of the resilient plate and has an operable portion which projects from the rear extension of the fork and a drive portion interposed like a cam between the rear extension of the fork and the resilient plate, and by virtue of the fact that a second pedal-like element is connected to the drive portion of the first element and is interposed between the rear extension of the fork and the first element, the latter being pivotable between a rest configuration, in which the first arm of the resilient plate is spaced from the castor and the second element is substantially screened by the rear extension of the fork, and an operative configuration, in which the first arm of the resilient plate is urged against the castor by the cam-like drive portion of the first element and the second pedal-like element projects substantially from the second rear element of the fork, its operation causing the first element to snap back to the rest configuration.

By virtue of these characteristics, the rear extension of the fork has no projection which can interfere with the movable structure to which the mounting is fixed. Moreover, the locking and release pedals are arranged in the same position relative to the mounting, facilitating the effecting of the two operations by the operator's foot, and without the need to operate controls situated away from the rear side of the mounting.

Further characteristics and advantages of the mounting according to the invention will become clear from the detailed description which follows with reference to the appended drawings, provided by way of non-limiting example, in which:
Figure 1 is a partially-sectioned side view of a mounting according to the invention with its parking brake in a released configuration,
Figure 2 is a view similar to Figure 1 showing the mounting with its parking brake in a locked configuration,
Figure 3 is a plan view taken on the arrow III of Figure 1,
Figure 4 is a rear perspective view of the mounting in the configuration of Figure 1, and
Figure 5 is a rear perspective view of the mounting in the configuration of Figure 2.

In the drawings, a mounting according to the invention is generally indicated 1 and carries a castor 2.

The mounting 1 includes an attachment plate 3 for fixing to the body of a movable structure, for example the bottom of an urban cleansing trolley, a forked member 4 which can rotate relative to the attachment plate 3 and an annular member 5 for connecting the plate 3 to the forked member 4.

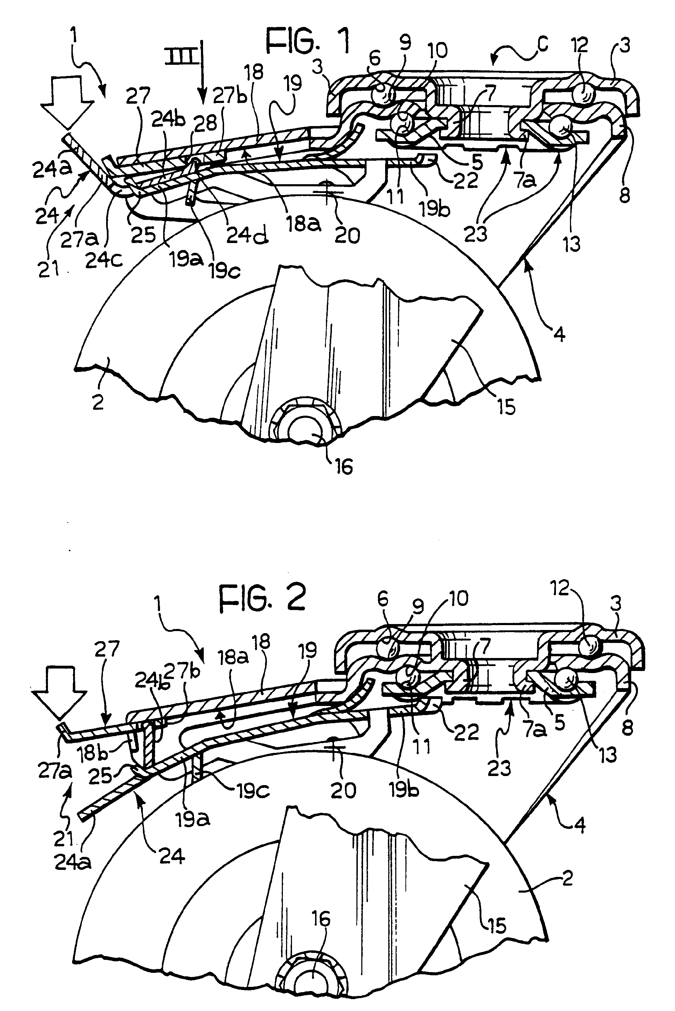

The attachment plate 3 has an annular track 6 on its lower face (with reference to Figures 1 and 2) and is formed centrally with a tubular appendage 7 whose lower end is upset at 7a against the edge of the annular member 5.

The forked member 4 has a top 8 located beneath the attachment plate 3 and provided with a first, upper annular track 9 facing the annular track 6 of the plate 3 and a second, lower annular track 10 which is concentric with the first track 9 and faces an annular track 11 of the annular member 5. An upper ring of balls 12 is interposed between the annular tracks 6 and 9 and a lower ring of balls 13 is interposed similarly between the annular tracks 10 and 11. A double ball bearing C is therefore formed between the forked member 4 and the attachment plate 3 to ensure that the forked member can rotate relative to the attachment plate.

The forked member 4 also includes two downwardly-projecting wings (15) formed integrally with the top 8 and carrying a pin 16 at their lower ends for rotatably supporting the castor 2.

A rear extension 18, in the form of a U-shaped metal plate, is fixed at 17 to the forked member 4.

The mounting according to the invention is provided with a parking brake operable from the exterior to lock the castor 2 against rotation relative to the forked member 4 and the forked member 4 against rotation relative to the attachment plate 3.

The parking brake includes a resilient plate 19 supported at 20 by the arms 15 of the forked member 4 above the castor 2 for pivoting like a rocker arm and an actuating assembly generally indicated 21. The resilient plate 19 has a first arm 19a for cooperating with the actuating assembly 21 and a second arm 19b with a bent end 22 for cooperating with corresponding teeth 23 formed beneath the annular member 5.

The actuating assembly 21 includes a first pedal 24 defined by an L-shaped metal plate articulated to a bent end 25 of the first arm 19a of the resilient plate 19. The first pedal 24 includes an operable portion 24a which projects from the rear extension 18 and a second portion 24b which is interposed like a cam between the end 25 of the resilient plate 19 and the lower wall 18a of the rear extension 18. The resilient plate 19 is articulated to the first pedal 24 in correspondence with a slot 24c between the portions 24a and 24b which are inclined to each other.

A second pedal 27 is articulated to a bent end 24d of the first pedal 24 and is defined by a flat metal plate having a first operable end 27a and a second end 27b in which an aperture 28 is formed. The bent end 24d of the first pedal 24 is articulated in this aperture 28. The end 27b of the second pedal 27 is T-shaped so as to define lateral abutments for cooperating with rear bent ends 18b of the rear extension 18 of the fork 4 in order to prevent the pedal from coming out of the extension.

Figures 1 and 4 show the configuration in which the mounting 1 is not braked. In this configuration, the operable portion 24a of the first pedal 24 projects upwards and the cam-like portion 24b is substantially parallel to the rear extension 18 of the fork. In this configuration, the second pedal 27 is almost completely hidden by the rear extension 18 and the two pedals are held in position by the resilience of the spring plate 19 which urges them against the lower surface 18a of the rear extension of the fork.

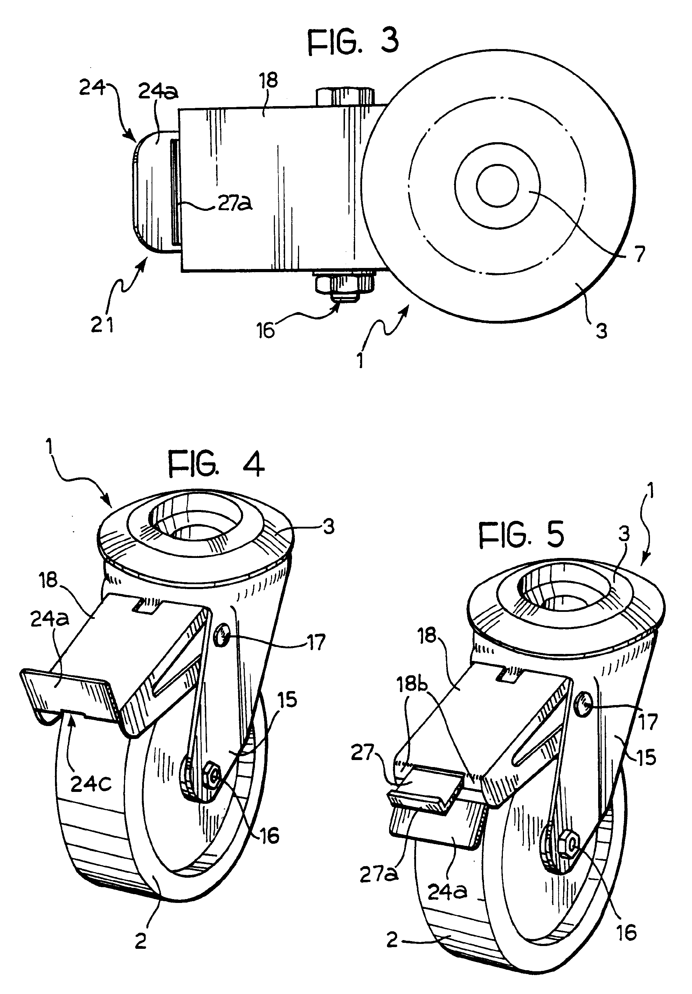

In order to change from the rest configuration to the braked configuration shown in Figures 2 and 5, the operable portion 24a of the first pedal 24 is operated by the operator's foot in the direction of the arrow shown in Figure 1. This action pivots the first pedal 24 about the end 25 of the resilient plate 19 and by means of the cam portion 24b causes the consequent movement of the first arm 19a of the resilient plate 19 away from the lower surface 18a of the rear extension 18 of the fork 4. The pivoting of the first pedal 24 thus causes a tooth 19c of the resilient plate 19 to contact the castor 2 (the contact preventing the rotation of the castor 2 about its pin 16), and the simultaneous engagement of the end 22 of the second arm 19b of the resilient plate 19 with the teeth 23 of the annular member 5 (the engagement causing the locking of the bearing C against rotation).

The pivoting of the first pedal 24 also causes the second pedal 27 to slide parallel to the rear extension 18 so that it projects from the extension above the actuating portion 24a of the first pedal 24 which is in turn positioned substantially as an extension of the first arm 19a of the resilient plate 19. The second pedal 27 also locks the resilient plate 19 in the operative position by means of the abutment of the end stops 27b of the second pedal 27 against the bent ends 18b of the rear extension 18.

In order to release the parking brake, it suffices to act with the foot on the end 27a of the second pedal 27 (in the direction of the arrow shown in Figure 2) so as to snap-release the cam portion 24b of the first pedal 24 between the rear extension 18 and the first arm 19a of the resilient plate 19, returning the parking brake to the configuration shown in Figures 1 and 4.

It is obvious from the above description and from the appended drawings that the particular type of parking brake according to the invention does not need any element situated on the top of the rear extension 18 of the fork 4.

The particular type of parking brake which is the subject of the present invention can also be used for mountings having different types of bearings situated between the fork and the attachment plate, as well as different types of connection between the pedals of the actuating assembly.

## Claims

1. A castor mounting comprising
- an attachment plate (3) for fixing to the body of a movable structure,
- a forked member (4) having a top (8) facing the attachment plate (3) and two downwardly-projecting wings carrying a pin for rotatably supporting the castor (2),
- an extension (18) of the fork which extends rearwardly above the castor,
- an annular member (5) fixed to the attachment plate (3) for connecting the latter to the top (8) of the forked member,
- an upper ring of balls (12) and a lower ring of balls (13) interposed between ball races defined between the attachment plate (3) and the top (8) of the forked member and between the top of the forked member and the annular member (5) respectively, and
- a parking brake comprising a resilient plate (19) which is supported by the forked member (4) so that it can pivot like a rocker arm and which is interposed between the castor (2) and the rear extension of the fork, (18) the plate having a first arm (19a) adapted to be operated from the exterior to lock the castor against rotation relative to the forked member, and a second arm, (19b) opposite the first, arranged to cooperate with a toothed edge (23) of the annular member (5) to lock the forked member against rotation relative to the attachment plate (3),
- a first pedal-like element (24) being connected to the first arm (19a) of the resilient plate (19) and having an operable portion (24a) which projects from the rear extension (18) of the fork (4) and a drive portion (24b) interposed like a cam between the rear extension (18) of the fork (4) and the resilient plate (19a, 19), the said first element (24) being pivotable by means of an external action between a rest configuration, in which the first arm (19a) of the resilient plate (19) is spaced from the castor (2), and an operative configuration in which the first arm (19a) of the resilient plate (19) is urged against the castor (2) by the cam-like drive portion (24b) of the first element (24)
characterised in that
a second pedal-like element (27) is connected to the drive portion (24b) of the first element (24) and is interposed between the rear extension (18) of the fork (4) and the first element (24), the second element (27) is substantially screened by the rear extension (18) of the fork (4), and in the operative configuration the second pedal-like element (27) projects substantially from the rear extension (18) of the fork (4), its operation causing the first pedal-like (24) element to snap back to the rest configuration.

2. A mounting according to Claim 1, characterised in that the first pedal-like element (24) is bent so as to be substantially L-shaped.

3. A mounting according to Claim 2, characterised in that the second pedal-like element (27) is flat and in that, when the first element (24) is in the operative configuration, the second element (27) is substantially coplanar with the rear extension (18) of the fork (4).

4. A mounting according to Claim 3, characterised in that the rear extension (18) of the fork (4) has an end provided with at least one abutment (18b) for cooperating with a stop portion (27b) of the second pedal-like element (27) to limit both the sliding of the latter relative to the rear extension (18) of the fork (4) and the pivoting of the first pedal-like element (24).

## Patentansprüche

1. Befestigung für Laufrollen, die enthält:
eine Befestigungsplatte (3), um sie am Körper eines bewegbaren Aufbaus zu befestigen,
ein Gabelelement (4), das einen Oberteil (8), der der Befestigungsplatte (3) gegenüberliegt, sowie zwei nach unten vorspringende Flügel besitzt, die einen Zapfen tragen, um die Laufrolle (2) drehbar aufzunehmen,
eine Verlängerung (18) der Gabel, die oberhalb der Laufrolle nach hinten verläuft,
ein Ringelement (5), das an der Befestigungsplatte (3) angebracht ist, um diese mit dem Oberteil (8) des Gabelelements zu verbinden,
einen oberen Ring von Kugeln (12) sowie einen unteren Ring von Kugeln (13), die zwischen Kugelbahnen liegen, die zwischen der Befestigungsplatte (3) und dem Oberteil (8) des Gabelelements bzw. zwischen dem Oberteil des Gabelelements und dem Ringelement (5) gebildet werden, sowie
eine Feststellbremse, die eine Federplatte (19) besitzt, die vom Gabelelement (4) so getragen wird, daß sie sich ähnlich einem Schwingarm verschwenken kann, wobei sie zwischen der Laufrolle (2) und der hinteren Verlängerung der Gabel (18) liegt, wobei die Platte einen ersten Arm (19a) besitzt, der so aufgebaut ist, daß er von außen betätigt werden kann, um die Laufrolle gegen eine Drehung relativ zum Gabelelement zu verriegeln, sowie einen zweiten Arm (19b) besitzt, der dem ersten Arm gegenüberliegt und so aufgebaut ist, um mit einem Zahnrand (23) des Ringelements (5) zusammenzuwirken, um das Gabelelement gegen eine Drehung relativ zur Befestigungsplatte (3) zu verriegeln,
ein erstes pedalartiges Element (24), das mit dem ersten Arm (19a) der Federplatte (19) verbunden ist und einen Betätigungsteil (24a) besitzt, der von der hinteren Verlängerung (18) der Gabel (4) vorspringt, sowie einen Antriebsteil (24b) besitzt, der nockenartig zwischen der hinteren Verlängerung (18) der Gabel (4) und der Federplatte (19a, 19) liegt, wobei das erste Element (24) durch eine äußere Einwirkung zwischen einer Ruhestellung, in der der erste Arm (19a) der Federplatte (19) von der Laufrolle (2) beabstandet ist, und eine Arbeitstellung verschwenkt werden kann, in der der erste Arm (19a) der Federplatte (19) vom nockenartigen Antriebsteil (24b) des ersten Elements (24) gegen die Laufrolle (2) gedrückt wird,
**dadurch gekennzeichnet**, daß
ein zweites pedalartiges Element (27) mit dem Antriebsteil (24b) des ersten Elements (24) verbunden ist, wobei es zwischen der hinteren Verlängerung (18) der Gabel (4) und dem ersten Element (24) liegt, wobei das zweite Element (27) von der hinteren Verlängerung (18) der Gabel (4) im wesentlichen verdeckt wird, und wobei in der Arbeitsstellung das zweite pedalartige Element (27) beträchtlich von der hinteren Verlängerung (18) der Gabel (4) vorspringt, wobei durch dessen Betätigung das erste pedalartige (24) Element in seine Ruhestellung zurückgeschnappt wird.

2. Befestigung gemäß Anspruch 1, **dadurch gekennzeichnet**, daß das erste pedalartige Element (24) so gebogen ist, daß es im wesentlichen L-förmig verläuft.

3. Befestigung gemäß Anspruch 2, **dadurch gekennzeichnet**, daß das zweite pedalartige Element (27) flach ist, und daß dann, wenn sich das erste Element (24) in der Arbeitsstellung befindet, das zweite Element (27) mit der hinteren Verlängerung (18) der Gabel (4) im wesentlichen in einer Ebene liegt.

4. Befestigung gemäß Anspruch 3, **dadurch gekennzeichnet**, daß die hintere Verlängerung (18) der Gabel (4) ein Ende besitzt, das mit zumindest einem Auflager (18b) versehen ist, um mit einem Anschlagteil (27b) des zweiten pedalartigen Elements (27) zusammenzuwirken, um sowohl dessen Verschiebung relativ zur hinteren Verlängerung (18) der Gabel (4) als auch das Verschwenken des ersten pedalartigen Elements (24) zu begrenzen.

## Revendications

1. Support de roue à pivot comprenant :
- une plaque de fixation (3) en vue d'une fixation au corps d'une structure mobile,
- un élément fourchu (4) comportant une face supérieure (8) faisant face à la plaque de fixation (3) et deux ailes s'étendant vers le bas portant une goupille pour supporter de façon rotative la roue à pivot (2),
- un prolongement (18) de la fourche qui s'étend vers l'arrière au-dessus de la roue à pivot,
- un élément annulaire (5) fixé à la plaque de fixation (3) pour relier cette dernière à la face supérieure (8) de l'élément fourchu,
- une couronne supérieure de billes (12) et une couronne inférieure de billes (13) placées entre des chemins de roulement définis entre la plaque de fixation (3) et la face supérieure (8) de l'élément fourchu et entre la face supérieure de l'élément fourchu et l'élément annulaire (5) respectivement, et
- un dispositif de blocage à l'arrêt comprenant une plaque élastique (19) qui est supportée par l'élément fourchu (4) de telle sorte qu'elle puisse pivoter comme un culbuteur et qui est placée entre la roue à pivot (2) et le prolongement arrière (18) de la fourche, la plaque comportant un premier bras (19a) adapté pour être actionné de l'extérieur pour bloquer la roue à pivot contre toute rotation par rapport à l'élément fourchu, et un second bras (19b), en face du premier, disposé de manière à coopérer avec un bord denté (23) de l'élément annulaire (5) afin de bloquer l'élément fourchu contre toute rotation par rapport à la plaque de fixation (3),
- un premier élément de type pédale (24) étant relié au premier bras (19a) de la plaque élastique (19) et comportant une partie manoeuvrable (24a) qui dépasse du prolongement arrière (18) de la fourche (4) et une partie d'entraînement (24b) placée comme une came entre le prolongement arrière (18) de la fourche (4) et la plaque élastique (19a, 19), ledit premier élément (24) pouvant pivoter grâce à une action extérieure entre une configuration de repos dans laquelle le premier bras (19a) de la plaque élastique (19) est éloigné de la roue à pivot (2), et une configuration active dans laquelle le premier bras (19a) de la plaque élastique (19) est poussé contre la roue à pivot (2) par la partie d'entraînement (24b) de type came du premier élément (24), caractérisé en ce que
un second élément de type pédale (27) est relié à la partie d'entraînement (24b) du premier élément (24) et est placé entre le prolongement arrière (18) de la fourche (4) et le premier élément (24), le second élément (27) étant pratiquement caché par le prolongement arrière (18) de la fourche (4), et dans la configuration active, le second élément de type pédale (27) dépasse sensiblement du prolongement arrière (18) de la fourche (4), son actionnement amenant le premier élément de type pédale (24) à revenir s'encliqueter dans la configuration de repos.

2. Support selon la revendication 1, caractérisé en ce que le premier élément de type pédale (24) est courbé de manière à présenter sensiblement une forme en L.

3. Support selon la revendication 2, caractérisé en ce que le second élément de type pédale (27) est plat et en ce que, lorsque le premier élément (24) est dans la configuration active, le second élément (27) est sensiblement coplanaire avec le prolongement arrière (18) de la fourche (4).

4. Support selon la revendication 3, caractérisé en ce que le prolongement arrière (18) de la fourche (4) a une extrémité pourvue d'au moins une butée (18b) pour coopérer avec une partie d'arrêt (27b) du second élément de type pédale (27) de manière à limiter à la fois le glissement de ce dernier par rapport au prolongement arrière (18) de la fourche (4) et le pivotement du premier élément de type pédale (24).
